(19) Europäisches Patentamt
European Patent Office
Office européen des brevets

(11) Veröffentlichungsnummer: **0 004 097**
**B1**

(12) **EUROPÄISCHE PATENTSCHRIFT**

(21) Anmeldenummer: **79100747.9**

(22) Anmeldetag: **13.03.79**

(51) Int. Cl.³: **C 08 L 83/04,**
C 08 G 77/38, C 08 J 9/02

# (54) Verfahren zum Herstellen von elastischen Organopolysiloxanschaumstoffen

(30) Priorität: **14.03.78 DE 2810921**

(43) Veröffentlichungstag der Anmeldung:
**19.09.79 Patentblatt 79/19**

(45) Bekanntmachung des Hinweises auf die Patenterteilung:
**26.11.80 Patentblatt 80/24**

(84) Benannte Vertragsstaaten:
**CH DE FR GB IT SE**

(56) Entgegenhaltungen:
**DE - A - 2 546 698**
**DE - A - 2 631 300**
**FR - A - 1 174 146**

(73) Patentinhaber: **WACKER-CHEMIE GMBH**
**Prinzregentenstrasse 22**
**D - 8000 München 22 (DE)**

(72) Erfinder: **Maschberger, Adolf**
**Lindacher Strasse 44**
**D - 8263 Burghausen (DE)**
**August, Peter, Dr.**
**Fichtenweg 8 f**
**D - 2105 Seevetal 4 (DE)**

**EP 0 004 097 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Verfahren zum Herstellen von elastischen Organopolysiloxanschaumstoffen

Die Herstellung von elastischen Organopolysiloxanschaumstoffen durch Vernetzen von Diorganopolysiloxan unter gleichzeitiger Schaumbildung ist bereits bekannt. Hierzu wird z.B. auf US-PS 40 24 091, ausgegeben: 17. Mai 1977, Chi-Long Lee et al., assignors to Dow Corning Corp., verwiesen. In der genannten Patentschrift werden zahlreiche, weitere einschlägige Patentschriften genannt. Mindestens eine dieser weiteren Patentschriften beschreibt ein Verfahren zum Herstellen von elastischen Organopolysiloxanschaumstoffen durch Vernetzen von Diorganopolysiloxan, das sich im Gemisch mit Siliciumdioxyd mit einer Oberfläche von mindestens 50 $m^2/g$ befindet, unter gleichzeitiger Schaumbildung, wobei als Vernetzungsmittel mindestens eine peroxydische Verbindung verwendet wird.

Gegenüber den bisher bekannten Verfahren zum Herstellen von elastischen Organopolysiloxanschaumstoffen durch Vernetzen von Diorganopolysiloxan unter gleichzeitiger Schaumbildung hat das erfindungsgemäße Verfahren insbesondere die Vorteile, daß es auch ohne Mitverwendung von rein organischen Treibmitteln, wie Dinitrosopentamethylentetramin, die häufig toxische Spaltprodukte und/oder Schaumstoffe mit unangenehmem Geruch, unerwünschter Färbung und/oder unbefriedigender mechanischer Festigkeit ergeben, befriedigende Schaumstoffe ergibt bzw. daß die bei dem erfindungsgemäßen Verfahren eingesetzten Mischungen lagerbeständiger sind.

Gegenstand der Erfindung ist ein Verfahren zum Herstellen von elastischen Organopolysiloxanschaumstoffen durch Vernetzen von Diorganopolysiloxan, das sich im Gemisch mit Siliciumdioxyd mit einer Oberfläche von mindestens 50 $m^2/g$ befindet, unter gleichzeitiger Schaumbildung, wobei als Vernetzungsmittel mindestens eine peroxydische Verbindung verwendet wird, dadurch gekennzeichnet, daß eine Mischung, die zusätzlich zu Diorganopolysiloxan, Siliciumdioxyd mit einer Oberfläche von mindestens 50 $m^2/m$ und peroxydischer Verbindung, mindestens eine Organosiliciumverbindung mit mindestens 2 Gewichtsprozent Si-gebundenen Hydroxylgruppen und mindestens ein Organopolysiloxan mit Si-gebundenem Wasserstoff enthält, bei höchstens dem Druck der umgebenden Atmosphäre auf eine Temperatur in Bereich von 280 bis 320 °C erwärmt wird.

Als zu verschäumende Diorganopolysiloxane können auch im Rahmen des erfindungsgemäßen Verfahrens alle Diorganopolysiloxane eingesetzt werden, die bisher mittels peroxydischer Verbindung vernetzt werden konnten. Es handelt sich dabei insbesondere um solche, die z.B. durch die allgemeine Formel.

$$Z_nSiR_{3-n}O(SiR_2O)_xSiR_{3-n}Z_n$$

wiedergegeben werden können. In dieser Formel bedeutet R gleiche oder verschiedene, einwertige, gegebenenfalls substituierte Kohlenwasserstoffreste, Z Hydroxylgruppen und/oder Kohlenwasserstoffoxygruppen mit 1 bis 18 Kohlenstoffatomen, n ist O oder 1, und x ist eine Zahl mit einem Wert, der einer Viskosität von mindestens 500000 mPa·s entspricht.

Vorzugsweise hat n den Wert 1 und Z die Bedeutung einer Hydroxylgruppe.

Innerhalb bzw. entlang der Siloxankette der Diorganopolysiloxane der oben angegebenen Formel können, was bei derartigen Formeln üblicherweise nicht dargestellt wird, zusätzlich zu den Diorganosiloxaneinheiten ($SiR_2O$) noch andere Siloxaneinheiten vorliegen. Beispiele für solche anderen, meist lediglich als mehr oder weniger schwer vermeidbare Verunreinigungen vorliegende Siloxaneinheiten sind solche der Formeln $RSiO_{3/2}$, $R_3SiO_{1/2}$ und $SiO_{4/2}$, wobei R jeweils die oben dafür angegebene Bedeutung hat. Vorzugsweise beträgt jedoch die Menge an solchen anderen Siloxaneinheiten als Diorganosiloxaneinheiten höchstens 1 Molprozent.

Beispiele für Kohlenwasserstoffreste R sind Alkylreste, wie Methyl-, Äthyl-, Propyl-, Butyl-, Hexyl- und Octadecylreste; Alkenylreste, wie Vinyl-, Allyl-, Äthylallyl- und Butadienylreste; Arylreste, wie der Phenylrest; Alkarylreste, wie Tolylreste; und Aralkylreste, wie der beta-Phenyläthylrest.

Beispiele für substituierte Kohlenwasserstoffreste R sind insbesondere halogenierte aliphatische Kohlenwasserstoffreste, wie der 3,3,3-Trifluorpropylrest.

Mindestens 80 % der Anzahl der Reste R sind vor allem wegen der leichten Zugänglichkeit vorzugsweise Methylreste. Die gegebenenfalls vorhandenen übrigen Reste R sind vorzugsweise frei von aliphatischen Mehrfachbindungen und insbesondere Phenylreste.

Der Wert von x list vorzugsweise so hoch, daß die Viskosität der zu verschäumdenden Diorganopolysiloxane mindestens $10^6$ mPa·s bei 25 °C beträgt oder daß die zu verschäumenden Diorganopolysiloxane einen im Brabender-Plastograph bein 25 °C und 60 Umdre hungen/-Min. bestimmten Wert von 50 his 1000 mkp, vorzugsweise 150 bis 800 mkp, haben. Falls erwünscht, können Gemische aus verschiedenen, zu verschäumenden Diorganopolysiloxanen eingesetzt werden.

Es gibt keine entscheidende obere Grenze für die Größe der Oberfläche des im Rahmen der Erfindung eingesetzten Siliciumdioxyds mit einer Oberfläche von mindestens 50 $m^2/g$. Vorzugsweise beträgt diese Oberflächengröße 125 bis 600 $m^2/g$, insbesondere 130 bis 400 $m^2/g$. (Die hier in Beschreibung und mindestens einem Patentanspruch angegebenen Werte für die Größe der Oberfläche des Siliciumdioxyds sind BET-Werte, also Werte, die durch Stickstoffadsorption gemäß ASTM Special Technical Publication, No. 51, 1941, Seite 95 ff., bestimmt wurden.) Als Siliciumdioxyd mit einer Oberfläche von mindestens 50 $m^2/g$ ist pyrogen erzeugtes Siliciumdioxyd bevorzugt. Falls erwünscht, kann aber auch unter Erhaltung der Struktur entwässertes Kieselsäurehydrogel und anderes gefälltes Siliciumdioxyd mit einer Oberfläche von mindestens 50 $m^2/g$ verwendet werden.

Falls erwünscht, können Gemische aus verschiedenen Arten von Siliciumdioxyd mit einer Oberfläche von mindestens 50 $m^2/g$ verwendet werden.

Mindestens ein Teil vom Siliciumdioxyd mit einer Oberfläche von mindestens 50 $m^2/g$ ebenso wie mindestens ein Teil von gegebenenfalls mitverwendetem weiteren Füllstoff (vgl. weiter unter) kann an der Oberfläche Organosilylgruppen aufweisen, wenn z.B. mindestens ein Teil des Siliciumdioxyds mit einer Oberfläche von mindestens 50 $m^2/g$ und/oder anderen Füllstoffes beispielsweise mit Trimethylchlorsilan vorbehandelt wurde, wie z.B. aus DE-OS 22 11 377, offengelegt: 13. September 1973, Anmelder: Elektroschmelzwerk Kempten GmbH, bekannt.

Vorzugsweise wird Siliciumdioxyd mit einer Oberfläche von mindestens 50 $m^2/g$ in Mengen von 15 bis 80 Gewichtsteilen je 100 Gewichtsteile des zu verschäumenden Diorganopolysiloxans eingesetzt. Als peroxydische Verbindungen können ebenfalls auch in Rahmen des erfindungsgemäßen Verfahrens alle peroxydischen Verbindungen eingesetzt werden, mittels derer auch bisher Diorganopolysiloxane vernetzt werden konnten. Beispiele für solche peroxydischen Verbindungen sind Acylperoxyde, wie Dibenzoylperoxyd, Bis-(4-chlorbenzoyl)-peroxyd und Bis-(2,4-dichlorbenzoyl)-peroxyd; Alkylperoxyde und Arylperoxyde, wie Di-tert.-butylperoxyd und Dicumylperoxyd; Perketale, wie 2,5-Bis-(tert.-butylperoxy)-2,5-dimethylhexan; sowie Perester, wie Diacetylperoxydicarbonat, tert.-Butylperbenzoat und tert.-Butylperoxyisopropylcarbonat. Bevorzugt sind Acylperoxyde.

Vorzugsweise werden die peroxydischen Verbindungen in Mengen von 0,2 bis 3 Gewichtsteilen je 100 Gewichtsteile des zu verschaümenden Diorganopolysiloxans eingesetzt.

Als Organosiliciumverbindungen mit mindestens 2 Gewichtsprozent Si-gebundenen Hydroxylgruppen können bei dem erfindungsgemäßen Verfahren beliebige Organosiliciumverbindungen mit mindestens 2 Gewichtsprozent Si-gebundenen Hydroxylgruppen eingesetzt werden, die auch bisher inn Verbindung mit Organopolysiloxan mit Si-gebundenem Wasserstoff zur Erzeugung von elastischen und nicht elastischen Organopolysiloxanschaumstoffen eingesetzt werden konnten. Die SiC-gebundenen organischen Reste in den Organosiliciumverbindungen mit mindestens 2 Gewichtsprozent Si-gebundenen Hydroxylgruppen können die gleichen Reste sein wie die oben definierten under erläuterten Reste R. Auch in den Organosiliciumverbindungen mit mindestens 2 Gewichtsprozent Si-gebundenen Hydroxylgruppen sind als SiCgebundene organische Reste Methylund Phenylreste bevorzugt. Die nicht durch solche Reste und Hydroxylgruppen abgesättigten Siliciumvalenzen der Siliciumatome in den Organosiliciumverbindungen mit mindestens 2 Gewichtsprozent Si-gebundenen Hydroxylgruppen sind vorzugsweise durch Siloxansauerstoffatome abgesättigt. Weiterhin ist bevorzugt, daß die Organosiliciumverbindungen mit mindestens 2 Gewichtsprozent Si-gebundenen Hydroxylgruppen je Molekül durchschnittlich mindestens 2 Si-gebundene Hydroxylgruppen enthalten. Schließ7lich ist auch bevorzugt, daß die Organosiliciumverbindungen mit mindestens 2 Gewichtsprozent Si-gebundenen Hydroxylgruppen höchstens 9,2 Gewichtsprozent, insbesondere 5 Gewichtsprozent, Si-gebundene Hydroxylgruppen enthalten. Die Organosiliciumverbindungen mit mindestens 2 Gewichtsprozent Si-gebundenen Hydroxylgruppen können linear, cyclisch oder verzweigt sein.

Die Organosiliciumverbindungen mit mindestens 2 Gewichtsprozent Si-gebundenen Hydroxylgruppen können beispielsweise sein: in den endständigen Einheiten je eine Si-gebundene Hydroxylgruppe aufweisende Dimethylpolysiloxane, in den endständigen Einheiten je eine Si-gebundene Hydroxylgruppe aufweisende Mischpolymere aus Dimethylsiloxan- und Phenylmethylsiloxaneinheiten, Si-gebundene Hydroxylgruppen aufweisende Mischpolymere aus " Monomethylsiloxanund Dimethylsiloxaneinheiten, in den endstädigen Einheiten je eine Si-gebundene Hydroxylgruppe aufweisende Phenylmethylpolysiloxane, Diphenylsilandiol, 2,4,6,8-Tetramethyl-2,4,6,8-tetrahydroxycyclotetrasiloxan und Gemische aus in den endständigen Einheiten je eine Si-gebundene Hydroxylgruppe aufweisenden Dimethylpolysiloxanen und Diphenylsilandiol, sowie Trimethylsilanol.

Vorzugsweise wird bei dem erfindungsgemäßen Verfahren Organosiliciumverbindung mit mindestens 2 Gewichtsprozent Si-gebundenen Hydroxylgruppen in Mengen von 2 bis 20 Gewichtsteilen je 100 Gewichtsteile zu verschäumendes Diorganopolysiloxan eingesetzt.

Als Organopolysiloxane mit Si-gebundenem Wasserstoff können ebenfalls bei dem erfindungsgemäßen Verfahren beliebige Organopolysiloxane mit Si-gebundenem Wasserstoff eingesetzt werden, die auch bisher in Verbindung mit Organosiliciumverbindung mit Si-gebundenen Hydroxylgruppen zur Erzeugung von elastischen und nicht elastischen Organopolysiloxanschaumstoffen eingesetzt werden konnten. Die SiC-gebundenen organischen Reste in den Organopolysiloxanen

mit Si-gebundenem Wasserstoff können mit Ausnahme von Resten mit aliphatischen Mehrfachbindungen ebenfalls die gleichen Reste sein wie die oben definierten und erläuterten Reste R. Vorzugsweise enthalten die Organopolysiloxane mit Si-gebundenem Wasserstoff durchschnittlich mindestens 3-Si-gebundene Wasserstoffatome je Molekül. Weiterhin ist es bevorzugt, daß sie mindestens 0,01 Gewichtsprozent insbesondere mindestens 1 Gewichtsprozent, und höchstens 1,67 Gewichtsprozent Si-gebundenen Wasserstoff enthalten. Auch die Organopolysiloxane mit Si-gebundenem Wasserstoff können linear, cyclisch oder verzweigt sein. Sie können insbesondere aus folgenden Siloxaneinheiten aufgebaut sein, wobei R jeweils, mit Ausnahme von Resten mit aliphatischen Mehrfachbindungen, die oben dafür angegebene Bedeutung hat: $RSiO_{3/2}$, $R_2SiO$, $R_3SiO_{1/2}$, $RHSiO$, $HSiO_{3/2}$, $R_2HSiO_{1/2}$, $H_2SiO$, $RH_2SiO_{1/2}$ und $SiO_{4/2}$, selbstverständlich mit der Maßgabe, daß je Molekül mindestens 1 Rest R, vorzugsweise mindestens 3 Reste R, und mindestens 1 Sigebundenes Wasserstoffatom, vorzugsweise mindestens 3 Si-gebundene Wasserstoffatome, vorliegen.

Die Organopolysiloxane mit Si-gebundenem Wasserstoff können beispielsweise sein: cyclische Methylhydrogenpolysiloxane, wie 2,4,6,8-Tetramethylcyclotetrasiloxan, durch Trimethylsiloxygruppen endblockiertes Methylhydrogenpolysiloxan, Mischpolymere aus Trimethylsiloxan-, Dimethylsiloxan- und Methylhydrogensiloxaneinheiten, Mischpolymere aus Dimethylhydrogensiloxan- und Methylhydrogensiloxaneinheiten sowie Mischpolymere aus Dimethylhydrogensiloxan-, Dimethylsiloxan- und Methylhydrogensiloxaneinheiten. Vorzugsweise haben die Organopolysiloxane mit Si-gebundenem Wasserstoff eine Viskosität von 10 bis 300 mPa·s bei 25 °C.

Vorzugsweise wird bei dem erfindungsgemäßen Verfahren Organopolysiloxan mit Si-gebundenem Wasserstoff in Mengen von 0,5 bis 50 Gewichtsteilen je 100 Gewichtsteile zu verschäumendes Diorganopolysiloxan eingesetzt.

Gemische von der Art derjenigen, die erfindungsgemäß verwendet werden können, waren aus GB—PS 9 09 052, Anmelder: Imperial Chemical Industries Limited, veröffentlicht: 16. Dezember 1959, wobei diese Patentschrift FR—PS 12 78 278 entspricht, bereits bekannt. Gemäß den vorstehend genannten Druckschriften werden die Gemische jedoch nur auf höchstens 250 °C erhitzt. Bei dieser Temperatur ist noch keine Schaumbildung derartiger Gemische zu beobachten. Deshalb wird eine so auffällige Erscheinung, wie sie die Bildung von elastischen Organopolysiloxanschaumstoffen darstellt, in den vorstehend genannten Druckschriften auch nicht berichtet.

Zusätzlich zu zu verschäumendem Diorganopolysiloxan, Siliciumdioxyd mit einer Oberfläche von mindestens 50 m²/g, peroxydischer Verbindung, Organosiliciumverbindung mit mindestens 2 Gewichtsprozent Si-gebundenen Hydroxylgruppen und Organopolysiloxan mit Si-gebundenem Wasserstoff können auch in Rahmen der Erfindung weitere Stoffe mitverwendet werden, die auch bisher bei der Herstellung von Organopolysiloxanelastomeren durch Vernetzen von Diorganopolysiloxan mittels peroxydischer Verbindungen mitverwendet werden konnten. Beispiele für solche zusätzlich mitverwendbaren Stoffe sind andere verstärkende Füllstoffe als Siliciumdioxyd mit einer Oberfläche von mindestens 50 m²/g, nicht verstärkende Füllstoffe, Pigmente, lösliche Farbstoffe, Mittel zur Beeinflussung der elektrischen Eigenschaften, wie leitfähiger Ruß, Korrosionsinhibitoren, Oxydationsinhibitoren, Hitzestabilisatoren, flammabweisend machende Mittel, Ausblühungen verhindernde Mittel und Mittel zur Verminderung des Druckverformungsrestes.

Beispiele für andere verstärkende Füllstoffe als Siliciumdioxyd mit einer Oberfläche von mindestens 50 m²/g sind pyrogen erzeugtes Aluminiumoxyd und pyrogen erzeugtes Titandioxyd.

Beispiele für nicht verstärkende Füllstoffe, also für Füllstoffe mit einer Oberfläche von weniger als 50 m²/g, sind bzw. können sein: Quarzmehl, Diatomeenerde, Kieselkreide, wie Neuburger Kreide (Neuburg Chalk), Calciumsilikat, Zirkoniumsilikat und Calciumcarbonat, z.B. in Form von gemahlener Kreide, und calciniertes Aluminiumsilikat. Auch faserige Füllstoffe, wie Asbeste und/oder Glasfasern, können mitverwendet werden. Schließlich ist auch die Mitverwendung rein organischer Treibmittel, wie Azoisobuttersäurenitril, Dinitrosopentamethylentetramin, Benzolsulfonsäurehydrazid, N,N' - Dinitroso - N,N' - dimethyl - tere - phthalsäurediamid, p,p' - Oxybis - (benzo - sulfonsäurehydrazid), Terephthalsäureazid oder Azodicarbonamid, zwar nicht besonders erwünscht (vgl. oben), aber auch nicht ausgeschlossen.

Das erfindungsgemäße Verfahren wird vorzugsweise beim Druck der umgebenden Atmosphäre, also bei 1 bar oder etwa 1 bar, durchgeführt. Falls erwünscht, können jedoch auch niedrigere Drücke, z.B. 0,5 bar, angewandt werden.

Das Erhitzen auf eine Temperatur im Bereich von 280 bis 320 °C dauert vorzugsweise 1 bis 5 Minuten. Damit nicht schon vor der Schaumbildung eine Vernetzung erfolgt, welche die Schaumbildung verhindert, ist es zweckmäßig, eine Temperatur im Bereich von 280 bis 320 °C möglichst rasch einzustellen.

Das erfindungsgemäße Verfahren kann absatzweise, halbkontinuierlich oder vollkontinuierlich durchgeführt werden.

Die erfindungsgemäß hergestellten elastischen Organopolysiloxanschaumstoffe können überall dort eingesetzt werden, wo auch

bisher Organopolysiloxanschaumstoffe eingesetzt werden konnten, beispielsweise zur thermischen Isolierung, Dichtung und Dämpfung von Schwingungen in Gebäuden, Land-, Wasser- und Luftfahrzeugen.

In den folgenden Beispielen beziehen sich alle Angaben von Teilen und Prozentsätzen auf das Gewicht, soweit nichts anderes angegeben ist.

Beispiel 1

100 Teile eines Gemisches aus 100 Teilen eines in den endständigen Einheiten je eine Sigebundene Hydroxylgruppe aufweisenden Dimethylpolysiloxans mit einem im Brabender-Plastograph bei 25 °C und 60 Umdrehungen/-Min. bestimmten Wert 520 mkp, 34 Teilen pyrogen in der Gasphase erzeugtem Siliciumdioxyd mit einer Oberfläche von 148 $m^2/g$ und 5 Teilen in den endständigen Einheiten je eine Sigebundene Hydroxylgruppe aufweisendes Dimethylpolysiloxan, wobei der Anteil des Gewichts der Hydroxylgruppen am Gesamtgewicht dieses Dimethylpolysiloxans 3,9 % beträgt, werden zunächst mit einem Gemisch aus 1 Teil durch Trimethylsiloxygruppen endblockiertem Methylhydrogenpolysiloxan mit einer Viskosität von 38 mPa·s bei 23 °C und 1,61 % Si-gebundenem Wasserstoff und 0,6 Teilen pyrogen in der Gasphase erzeugtem Siliciumdioxyd mit einer Oberfläche von 148 $m^2/g$ und dann mit 2 Teilen Dibenzoylperoxyd vermischt.

Zwei Tage nach diesem Vermischen wird eine Probe der Mischung zu einem 1 cm dicken Fell gewalzt. Das Fell wird 5 Minuten auf 300 °C unter dem Druck der umgebenden Atmosphäre erhitzt und dann 2 Stunden in einem Umluftofen auf 200 °C erwärmt.

Eine weitere Probe der Mischung wird 3 Monate bei Raumtemperatur gelagert. Dann wird sie ebenfalls zu einem 1 cm dicken Fell gewalzt und das Fell 5 Minuten auf 300 °C unter dem Druck der umgebenden Atmosphäre erhitzt und dann 2 Stunden in einem Unluftofen auf 200 °C erwärmt.

Beispiel 2

Die in Beispiel 1 beschriebene Arbeitsweise wird wiederholt mit der Abänderung, daß anstelle der Mischung aus 1 Teil des in Beispiel 1 näher beschriebenen Organopolysiloxans mit Si-gebundenum Wasserstoff und 0,6 Teilen des in Beispiel 1 näher beschriebenen pyrogen erzeugten Siliciumdioxyds eine Mischung aus 2 Teilen des gleichen Organopolysiloxans mit Si-gebundenem Wasserstoff und 1,1 Teilen des gleichen pyrogen erzeugten Siliciumdioxyds verwendet wird.

Beispiel 3

Die in Beispiel 1 beschriebene Arbeitsweise wird wiederholt mit der Abänderung, daß anstelle der Mischung aus 1 Teil des in Beispiel 1 näher beschriebenen Organopolysiloxans mit Si-gebundenem Wasserstoff und 0,6 Teilen des in Beispiel 1 näher beschriebenen pyrogen erzeugten Siliciumdioxyds eine Mischung aus 3 Teilen des gleichen Organopolysiloxans mit Si-gebundenem Wasserstoff und 1,8 Teilen des gleichen pyrogen erzeugten Siliciumdioxyds verwendet wird.

Beispiel 4

Die in Beispiel 1 beschriebene Arbeitsweise wird wiederholt mit der Abänderung, daß anstelle der Mischung aus 1 Teil des in Beispiel 1 näher beschriebenen Organopolysiloxans mit Si-gebundenem Wasserstoff und 0,6 Teilen des in Beispiel 1 näher beschriebenen pyrogen erzeugten Siliciumdioxyds eine Mischung aus 4 Teilen des gleichen Organopolysiloxans mit Si-gebundenem Wasserstoff und 2,4 Teilen des gleichen pyrogen erzeugten Siliciumdioxyds verwendet wird.

Beispiel 5

Die in Beispiel 1 beschriebene Arbeitsweise wird wiederholt mit der Abänderung, daß anstelle der Mischung aus 1 Teil des in Beispiel 1 näher beschriebenen Organopolysiloxans mit Si-gebundenem Wasserstoff und 0,6 Teilen des in Beispiel 1 näher beschriebenen pyrogen erzeugten Siliciumdioxyds eine Mischung aus 5 Teilen des gleichen Organopolysiloxans mit Si-gebundenem Wasserstoff und 3,0 Teilen des gleichen pyrogen erzeugten Siliciumdioxyds werwendet wird.

Die gemäß den Beispielen 1 bis 5 hergestellten elastischen Organopolysiloxanschaumstoffe sind geruchlos unde auch noch nach dem 2 Stunden Erhitzen auf 200 °C im Umluftofen farblos. Das spezifische Gewicht der gemäß den Beispielen 1 bis hergestellten elastischen Organopolysiloxanschaumstoffe ist in der folgenden Tabelle angegeben.

TABELLE

| Beispiel | Spezifisches Gewicht (g/cm³) Schaumstoffherstellung erfolgte 2 Tage nach Herstellung der Mischung | 3 Monate nach Herstellung der Mischung |
|---|---|---|
| 1 | 0,52 | 0,56 |
| 2 | 0,50 | 0,50 |
| 3 | 0,47 | 0,44 |
| 4 | 0,43 | 0,43 |
| 5 | 0,40 | 0,41 |

**Patentansprüche**

1. Verfahren zum Herstellen von elastischen Organopolysiloxanschaumstoffen durch Vernetzen von Diorganopolysiloxan, das sich im Gemisch mit Siliciumdioxyd mit einer Oberfläche von mindestens 50 $m^2/g$ befindet, unter gleichzeitiger Schaumbildung, wobei als Vernetzungsmittel mindestens eine peroxydische Verbindung verwendet wird, dadurch gekennzeichnet, daß eine Mischung, die zusätzlich zu Diorganopolysiloxan, Siliciumdioxyd mit einer Oberfläche von mindestens 50 $m^2/g$ und peroxydischer Verbindung, mindestens eine Organosiliciumverbindung mit mindestens 2 Gewichtsprozent Si-gebundenen Hydroxylgruppen und mindestens ein Organopolysiloxan mit Si-gebundenem Wasserstoff enthält, bei höchstens dem Druck der umgebenden Atmosphäre auf eine Temperatur im Bereich von 280 bis 320 °C erwämt wird.

2. Verfahren nach Anspruch 1, dadurch gekennzeichnet, daß die zu erwärmende Mischung auf 100 Gewichtsteile zu verschäumendes Diorganopolysiloxan 2 bis 20 Gewichtsteile Organosiliciumverbindung mit mindestens 2 Gewichtsprozent Si-gebundenen Hydroxylgruppen enthält.

3. Verfahren nach Anspruch 1 oder 2, dadurch gekennzeichnet, daß die zu erwärmende Mischung auf 100 Gewichtsteile zu verschäumendes Diorganopolysiloxan 0,5 bis 50 Gewichtsteile Organopolysiloxan mit 0,01 bis 1,67 Gewichtsprozent Si-gebundenem Wasserstoff enthält.

**Claims**

1. Process for the manufacture of elastic organopolysiloxane foam materials by crosslinking a diorganopolysiloxane that is in admixture with silica having a specific surface area of at least 50 $m^2/g$, with the simultaneous formation of foam and with at least one peroxidic compound being used as a crosslinking agent, characterised in that a mixture that contains at least one organosilicon compound having at least 2% by weight of Si-bonded hydroxyl groups and at least one organopolysiloxane having Si-bonded hydrogen, in addition to a diorganopolysiloxane, silica having a specific surface area of at least 50 $m^2/g$ and a peroxidic compound, is heated to a temperature within the range of 280 to 320°C at a pressure not greater than that of the surrounding atmosphere.

2. Process according to claim 1, characterised in that the mixture to be heated contains, per 100 parts by weight of diorganopolysiloxane to be foamed, from 2 to 20 parts by weight of organosilicon compound having at least 2% by weight of Si-bonded hydroxyl groups.

3. Process according to claim 1 or 2, characterised in that the mixture to be heated contains, per 100 parts by weight of diorganopolysiloxane to be foamed, from 0.5 to 50 parts by weight of organopolysiloxane having from 0.01 to 1.67% by weight of Si-bonded hydrogen.

**Revendications**

1. Procédé de fabrication de poly-organosiloxanes alvéolaires élastiques par réticulation, avec expansion simultanée, d'un poly-diorganosiloxane en mélange avec du dioxyde de silicium ayant une surface spécifique d'au moins 50 $m^2/g$, au moyen comme agent réticulant, d'au moins un composé peroxydé, procédé caractérisé en ce que l'on chauffe à une température de 280 à 320°C et à une pression ne dépassant pas celle de l'atmosphère ambiante, un mélange qui contient, outre poly-diorganosiloxane, le dioxyde de silicium ayant une surface spécifique d'au moins 50 $m^2/g$ et le

peroxyde, au moins un composé organosilicique à 2% en poids au moins de groupes hydroxyle liés au silicium, et au moins un polyorganosiloxane contenant de l'hydrogène lié au silicium.

2. Procédé selon la revendication 1, caractérisé en ce que le mélange à chauffer contient, par 100 parties en poids de polydiorganosiloxane à expanser, 2 à 20 parties en poids du composé organosilicique à 2% en poids au moins de groupes hydroxyle liés au silicium.

3. Procédé selon l'une des revendications 1 et 2, caractérisé en ce que le mélange à chauffer contient, par 100 parties en poids de polydiorganosiloxane à expanser, 0,5 à parties en poids d'un poly-organosiloxane contenant 0,01 à 1,67% en poids d'hydrogène lié au silicium.